(19) Europäisches Patentamt / European Patent Office / Office européen des brevets

(11) **EP 3 310 839 B1**

## (12) FASCICULE DE BREVET EUROPEEN

(45) Date de publication et mention
de la délivrance du brevet:
**12.10.2022 Bulletin 2022/41**

(21) Numéro de dépôt: **16734429.0**

(22) Date de dépôt: **08.06.2016**

(51) Classification Internationale des Brevets (IPC):
**C08G 63/181** *(2006.01)* **C08G 63/20** *(2006.01)*
**C09D 167/02** *(2006.01)*

(52) Classification Coopérative des Brevets (CPC):
**C09D 167/02; C08G 63/181; C08G 63/20**

(86) Numéro de dépôt international:
**PCT/FR2016/051373**

(87) Numéro de publication internationale:
**WO 2016/203136 (22.12.2016 Gazette 2016/51)**

(54) **RESINE POLYESTER HYDROXYLEE ET/OU CARBOXYLEE A HAUT EXTRAIT SEC ET HAUT POUVOIR COUVRANT POUR REVETEMENT DE FEUILLE METALLIQUE**

HYDROXYLIERTES UND/ODER CARBOXYLIERTES POLYESTERHARZ MIT HOHEM FESTSTOFFGEHALT UND HOHER DECKKRAFT ZUR BESCHICHTUNG VON METALLFOLIE

HYDROXYLATED AND/OR CARBOXYLATED POLYESTER RESIN WITH HIGH SOLIDS CONTENT AND HIGH COVERING POWER FOR COATING OF METAL FOIL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2015 FR 1555541**

(43) Date de publication de la demande:
**25.04.2018 Bulletin 2018/17**

(73) Titulaire: **Arkema France**
**92700 Colombes (FR)**

(72) Inventeurs:
• **COGORDAN, Frank**
**75019 Paris (FR)**

• **OZERAY, Hervé**
**60190 Estrees Saint Denis (FR)**
• **RIONDEL, Alain**
**77178 Saint Pathus (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A1- 0 855 433     WO-A1-95/18171**
**WO-A1-03/022946**

**Description**

La présente invention concerne une résine polyester hydroxylée et/ou carboxylée de composition spécifique, en particulier caractérisée par des compositions spécifiquement sélectionnées de composant polyol et de composant polyacide exempte de monoalcools et de monoacides gras insaturés, en particulier avec un taux d'huile nul pour résines en milieu solvant à haut extrait sec d'au moins 60%, de préférence d'au moins 62%, plus préférentiellement de 65 à 90% en poids et de viscosité convenable pour revêtements à haut extrait sec et à haut pouvoir couvrant, en particulier pour revêtements de feuilles métalliques ou couramment appelés également « coil coatings ». Des résines polyesters utilisables pour des revêtements de feuilles métalliques sont connues du document WO95/18171.

L'objectif de la présente invention est d'améliorer, par la structure spécifique de la résine liant utilisée, le taux de solides avec un taux en poids d'au moins 60%, de préférence d'au moins 62% et plus préférentiellement de 65 à 90%, encore plus préférentiellement de 70 à 85%, tout en maintenant une viscosité de la composition de revêtement convenable pour l'application finale, en particulier pour l'application sur feuilles métalliques ou autrement appelée aussi « application de revêtement coil ». Cette viscosité (Brookfield) doit être inférieure à 1000 mPa.s à la température d'application allant de 15 à 35°C, la viscosité Brookfield étant mesurée selon la méthode ISO 3219. Concernant la résine visée, elle doit avoir une viscosité inférieure à 15000 mPa.s en solution dans un solvant organique à 25°C avec un taux de résine (extrait sec) de 80% en poids. Concernant le pouvoir couvrant de la composition finale de ce revêtement, celui-ci de préférence est supérieur à 400 m$^2$ par kg de revêtement pour une épaisseur de 1 $\mu$. En particulier, une augmentation d'au moins 10% et de préférence de 10 à 20% du pouvoir couvrant est obtenue avec une composition de revêtement comprenant ladite résine par rapport à une résine polyester courante.

Les compositions à base de polyester, telles que définies selon la présente invention, ont comme objectif particulier d'améliorer le pouvoir couvrant des peintures (rendement) et répondent à un réel besoin du marché des peintures, en particulier pour le revêtement des feuilles métalliques.

La présente invention concerne d'abord une résine polyester hydroxylée ou carboxylée de structure spécifique obtenue à partir de compositions spécifiques de composants polyol A) et de polyacide B).

Elle concerne également ladite résine sous forme de solution dans un solvant organique de ladite résine, en particulier à un taux de résine par rapport au poids de ladite solution allant de 65 à 90%, de préférence de 70 à 90% et plus préférentiellement de 72 à 85%.

L'invention couvre également une composition réticulable comprenant ladite résine, en particulier une composition de revêtement et plus particulièrement une composition de revêtements pour feuilles métalliques (« coils »).

Est couverte également l'utilisation de ladite résine ou d'une solution de ladite résine comme liant dans une composition de revêtement en milieu solvant organique, en particulier pour revêtements réticulables et plus particulièrement pour augmenter le pouvoir couvrant dudit revêtement.

Un autre objet de l'invention est le produit fini qui est un revêtement qui résulte de l'utilisation de ladite résine ou d'une solution de ladite résine ou d'une composition réticulable la contenant, en particulier ayant un pouvoir couvrant augmenté (amélioré) par rapport à d'autres résines polyesters courantes.

Le premier objet de l'invention concerne une résine polyester porteuse d'au moins deux fonctions parmi hydroxy et/ou carboxy, laquelle résine a comme composants :

A) un composant polyol comprenant :

a1) au moins un diol en $C_3$ à $C_6$, et porteur (en plus) d'au moins deux substituants latéraux alkyles en $C_2$ à $C_4$, en particulier avec lesdits alkyles étant différents, de préférence ledit diol étant en $C_3$ ou $C_4$,
a2) au moins un diol en $C_3$ à $C_6$, porteur d'au moins un substituant latéral méthyle, en particulier de deux substituants latéraux méthyles, de préférence ledit diol étant en $C_3$ ou $C_4$,
a3) au moins un diol linéaire en $C_2$ à $C_6$, porteur d'aucun substituant (alkyl) latéral,
a4) au moins un polyol de fonctionnalité > 2 et de préférence de fonctionnalité de 3 ou 4, plus préférentiellement de 3

et
B) un composant polyacide comprenant :

b1) au moins un diacide aromatique ou son anhydride, de préférence représentant de 20 à 75% en poids de ladite résine,
b2) au moins un diacide aliphatique linéaire en $C_4$ à $C_{10}$, de préférence de $C_4$ à $C_8$,
b3) en option, au moins un diacide cycloaliphatique

de préférence avec le rapport molaire b1 / b2 allant de 1/1 à 4/1, ladite résine étant exempte de tout monoacide gras insaturé et de tout monoalcool gras insaturé et ayant une température de transition vitreuse mesurée par DSC à 10°C/min, de -10°C à 50°C, de préférence de 0°C à 30°C et une Mn (calculée) allant de 500 à 10000,

ladite résine ayant un indice hydroxy allant de 10 à 200 mg KOH/g,

ledit diol a1) représente de 5 à 15% en poids de ladite résine.

Le terme « un diol en $C_n$ » où n est le nombre de carbones signifie qu'il a n atomes de carbone enchainés (liés entre eux en chaîne) hormis les substituants latéraux qui ne sont pas comptés dans ledit nombre n.

Plus particulièrement et de préférence, ledit diol a1) est le 2-butyl, 2-éthyl 1,3-propane diol.

Les deux composants a3) et a4) sont présents comme composants essentiels avec les autres composants a1), a2) et a3) comme définis ci-haut.

Ledit diol a1) représente de 5 à 15% en poids de ladite résine.

En particulier, a3) est présent, le rapport molaire a1 / (a1+a2+a3) varie de 0,1 à 0,4 et de préférence de 0,1 à 0,3. Plus particulièrement, quand a3) et a4) sont présents le rapport molaire a1 / (a1+a2+a3+a4) varie de 0,1 à 0,4 et de préférence de 0,1 à 0,3.

Comme diol a2), il peut être sélectionné parmi : néopentyl glycol (2,2-diméthyl 1,3-propanediol) ou le diméthyl butane diol et de préférence le néopentyl glycol. Le taux en poids dudit polyol a2) est de préférence inférieur à 75% en poids dudit composant polyol A).

Le polyol a4) est présent en plus de a1), a2) et a3) dans ledit composant polyol A), avec la structure de ladite résine polyester étant ramifiée (ou branchée). Une structure ramifiée de résine polyester signifie ici que ladite résine polyester porte des greffons polyesters sur sa chaîne principale.

Selon une composition particulière de ladite résine, le composant acide B) de ladite résine comprend (en plus des diacides b1) et b2)) au moins un diacide carboxylique cycloaliphatique b3) ou son anhydride.

Comme diacide aromatique b1) ou son anhydride, on peut citer l'acide isophtalique, l'acide téréphtalique, l'anhydride phtalique.

Comme diacide aliphatique linéaire b2), on peut citer l'acide adipique, l'acide succinique, l'acide sébaccique.

Comme diacide cycloaliphatique b3), on peut citer le cyclohexane dicarboxylique acide, l'acide hexahydrophtalique.

Ladite résine a un indice hydroxy ou un indice carboxy ou un indice global hydroxy + carboxy qui peut aller de 10 à 200, de préférence de 15 à 175 (en mg KOH/g).

La mesure de l'indice OH est réalisée selon la méthode ISO 2554 et celle de l'indice d'acide selon la méthode ISO 2114.

Selon une option particulière, ladite résine est une résine hydroxylée.

La température de transition vitreuse de ladite résine, mesurée par DSC à 10°C/min, (2$^{ième}$ passage) peut varier de -10°C à 50°C, de préférence de 0°C à 30°C et avec une masse moléculaire moyenne en nombre Mn calculée allant de 500 à 10000, de préférence de 1000 à 10000. La valeur de Mn est calculée à partir de l'indice d'hydroxyle et de l'indice d'acide mesurés qui permettent de calculer une masse équivalente $M_{eq}$ par fonction (OH ou carboxy ou somme des deux si les deux présentes) et de la fonctionnalité moyenne en nombre de la résine, cette fonctionnalité moyenne $f_m$ étant calculée à partir de :

$$f_m = \Sigma_i\, x_i {*} f_i \,/\, \Sigma_i\, x_i$$

avec $X_i$ étant le nombre de moles du composant i (acide ou alcool) et

$f_i$ étant la fonctionnalité dudit composant i

la masse équivalente $M_{eq}$ est définie par $M_{eq} = 56000/(I_{OH}+I_{acide})$

Ainsi

$$M_{n\ calculée} = M_{eq} {*} f_m$$

Le deuxième objet de l'invention concerne une solution de résine comprenant au moins une résine telle que définie ci-haut selon l'invention et un solvant organique de ladite résine, en particulier avec un taux de ladite résine sur le poids total de résine + solvant (poids total de solution) supérieur à 60%, de préférence de 65 à 90%, plus préférentiellement de 70 à 90% et encore plus préférentiellement de 72 à 85%.

Comme solvant organique convenable pour préparer ladite solution de résine, ledit solvant peut être sélectionné parmi les esters méthyliques ou esters éthyliques d'acides monocarboxyliques en $C_2$ à $C_4$ ou esters desdits acides monocarboxyliques avec des monoéthers méthoxy ou éthoxy de diols en $C_2$ à $C_4$, en particulier l'acétate de méthoxy propyle ou parmi diesters méthyliques ou éthyliques de diacides carboxyliques en $C_4$ à $C_6$, terpènes, polyhydroxyalcanoates, esters méthyliques ou éthyliques d'huiles d'acides gras ou esters d'acide lactique avec alcools en $C_1$ à $C_8$, solvants aromatiques comme le xylène ou d'autres solvants aromatiques qui sont des coupes de distillation d'hydrocarbures comportant 9 atomes de carbone avec point d'ébullition (Eb) allant de 155 à 180°C de type Solvarex® 9 ou coupes de distillation d'hydrocarbures aromatiques comportant 10 atomes de carbone de point Eb allant de 180 à 193°C de type Solvesso® 150 ND, éventuellement en mélange avec les monoéthers de glycol comme le butyl glycol (ou butoxyéthanol).

De préférence, ledit solvant est sélectionné parmi les solvants aromatiques, tels que définis ci-haut, seuls ou en mélange avec les monoéthers de glycol, comme par exemple le mélange d'une coupe de distillation en $C_9$ de point Eb allant de 155 à 180°C comme le Solvarex® 9 avec le butylglycol. Le taux en poids de ladite résine dans ladite solution peut varier de 60 à 90%, en particulier de 62 à 90%, plus particulièrement de 65 à 90% et encore plus particulièrement de 70 à 90% ou entre 70 et 90% et plus préférentiellement de 72 à 85%. Ledit solvant peut être le solvant de préparation de ladite résine si préparée par polycondensation en milieu solvant ou un solvant de dissolution après préparation par polycondensation en masse. Le taux de solides peut être ajusté par addition supplémentaire de solvant si la résine est préparée au départ dans un solvant. Ledit solvant peut être un mélange d'au moins deux solvants parmi ceux cités.

Ladite résine peut être préparée par réaction de polycondensation entre le composant polyol A) avec le composant acide B) tels que définis ci-haut. La réaction peut avoir lieu en milieu solvant ou à l'état fondu en masse, comme déjà connu de l'homme du métier. Lorsque la réaction est conduite en présence d'un solvant comme entraineur azéotropique pour éliminer l'eau, le solvant choisi préférentiellement est le xylène.

La réaction est conduite avantageusement en présence d'un catalyseur. Comme catalyseur, on peut utiliser les titanates d'alkyle comme, par exemple, le titanate d'isopropyle, le titanate de butyle, le titanate de 2- éthyl hexyle ou les dérivés de l'étain comme, par exemple, l'oxyde d'étain, l'oxalate d'étain, l'oxyde de monobutyl étain. Les quantités de catalyseur utilisées sont comprises entre 100 et 5000 ppm par rapport à l'ensemble des monomères et de préférence de 500 à 1500 ppm toujours par rapport à l'ensemble des monomères.

Un autre objet important de l'invention est une composition réticulable de liant, laquelle comprend comme liant au moins une résine polyester ou une solution de résine comme définies ci-haut selon l'invention.

Plus particulièrement, ladite composition comprend au moins un solvant organique tel que défini ci-haut, avec le taux de ladite résine allant de 60% à 90%, de préférence de 62 à 90%, plus préférentiellement de 65 à 85%, encore plus préférentiellement de 70 à 85% par rapport au poids total de la résine avec le solvant.

Ladite composition est de préférence une composition de revêtement, en particulier pour feuilles métalliques (ou autrement dit pour application dite « coil »). Cette composition peut s'appliquer pour :

- les revêtements de finition,
- les revêtements primaires,
- les revêtements d'envers de bande (en anglais « backer). Il s'agit de revêtements de la partie interne de la feuille métallique non exposée aux intempéries et à la lumière.

Ladite composition réticulable, en plus de ladite résine, peut comprendre en plus au moins un agent réticulant porteur de groupements réactifs avec les groupements hydroxyles et/ou carboxyles portés par ladite résine. Plus particulièrement, ledit agent réticulant est sélectionné parmi la mélamine ou un polyisocyanate, en particulier polyisocyanate bloqué ou un polyanhydride ou un polysilane, en particulier polysilane bloqué par alcoxy quand ladite résine est hydroxylée ou ledit agent réticulant est sélectionné parmi les polyépoxydes ou polyols quand ladite résine est carboxylée.

Selon une préférence particulière, ladite composition est une composition de revêtement en milieu solvant organique, en particulier une composition de peinture ou de vernis, plus particulièrement pour surfaces métalliques (ou autrement dit pour « coils »).

Ladite composition peut être pigmentée et dans ce cas elle comprend en plus au moins un pigment. Plus particulièrement, elle comprend ladite résine, un solvant organique et un pigment.

Un autre objet particulier couvert par la présente invention concerne l'utilisation de ladite résine ou d'une solution de ladite résine comme définies ci-haut selon l'invention comme liant dans des compositions de revêtements en milieu solvant organique, en particulier dans les compositions de revêtements réticulables.

Selon une première option, ladite utilisation concerne des compositions de revêtements à comportement « monocomposant » pour métal, en particulier pour revêtement de feuille métallique (autrement dit « coil »). Un comportement « monocomposant » signifie que, malgré la présence de 2 composants réactifs (résine et agent réticulant), la composition réticulable reste stable au stockage à l'ambiante. C'est le cas d'agents réticulants bloqués comme les isocyanates bloqués ou les silanes bloqués alcoxy qui ne peuvent réagir sans déblocage préalable par chauffage ou hydrolyse. De même, les mélamines sont convenables comme agent réticulant pour ce type de composition avec des polyesters hydroxylés car la réaction n'a lieu qu'après chauffage préalable. Plus particulièrement, une telle composition de revêtement à comportement monocomposant peut comprendre une résine hydroxylée telle que définie selon l'invention, un solvant organique préféré comme défini ci-avant et un agent réticulant choisi parmi les isocyanates (polyisocyanates) bloqués, les silanes bloqués par alcoxy ou les mélamines. Une telle composition de revêtement à comportement « monocomposant » peut être utilisée pour le revêtement de feuilles métalliques (appelées aussi « coils »).

Plus particulièrement, il peut s'agir de revêtement primaire, de finition, d'envers de bande ou de monocouche.

Selon une autre utilisation particulière, il peut s'agir aussi de revêtements en poudre.

Selon une autre utilisation particulière, il s'agit de revêtements « bicomposants ». Une composition de revêtement « bicomposant » signifie que la réaction de réticulation démarre dans le mélange de ladite résine avec l'agent réticulant et par conséquent, ledit mélange (addition de l'agent réticulant) se fait au moment de l'application finale.

De préférence, ladite utilisation de ladite résine ou de ladite solution de résine concerne un revêtement pigmenté pour l'augmentation du pouvoir couvrant (rendement) dudit revêtement.

Le dernier objet de l'invention concerne le produit final obtenu qui est un revêtement, lequel résulte de l'utilisation d'au moins une résine ou d'au moins une solution de résine telles que définies ci-haut selon l'invention ou d'une composition de revêtement comme définie également selon l'invention. Plus particulièrement et de préférence, ledit revêtement est un revêtement de feuille métallique (autrement dit de « coil »).

Les exemples suivants sont exposés ci-après à titre d'illustration de l'invention et de ses performances et ne limitent nullement la portée de l'invention.

**Partie expérimentale :**

1) Préparation de la résine pour revêtement primaire

1.1) Matières premières utilisées

Tableau 1 : Matières premières utilisées

| Nom commercial | Nom chimique | Fournisseur | Fonction technique | Nature de la fonction / fonctionnalité | Composition type selon l'invention |
|---|---|---|---|---|---|
| PAN | Anhydride phtalique | Polynt | Monomère | Carboxy/2 | Diacide b1) |
| EG | Ethylène glycol | Dow | Monomère | Hydroxy/2 | Diol a3) |
| NPG | Néopentyl glycol | Perstorp | Monomère | Hydroxy/2 | Diol a2) |
| BEPD | Butyl éthyl propane diol | Perstorp | Monomère | Hydroxy/2 | Diol a1) |
| AA | Acide Adipique | Bayer | Monomère | Carboxy/2 | Diacide b2) |
| HDD | 1-6 Hexane diol | Perstorp | Monomère | Hydroxy/2 | Diol a3) |
| Solvarex® 9 | Solvant aromatique | Total | Solvant de la résine | | Solvant de la résine |
| BG | Butyl glycol | Brenntag | Solvant de la résine | | Solvant de la résine |
| Fascat® 4100 | Oxyde de monobutyl étain | PMC Organometallix | Catalyseur | | Catalyseur |
| Xylène | Xylène | Total | Solvant entraineur azéotropique | | Solvant entraineur azéotropique |

1.2) Mode opératoire de préparation de la résine : selon l'invention (exemple 1) et essai comparatif 1 sans BEPD

Dans un réacteur de 1,5 l en verre équipé :

- d'une colonne à distiller de type Vigreux surmontée d'un séparateur Dean Stark,
- d'une canne plongeante pour introduire l'azote,
- d'une sonde de température,

on charge les monomères en quantités telles que décrites dans le tableau 2.

La synthèse a lieu à 220°C maximum en présence d'un catalyseur (Fascat® 4100 : 0,08 g) et de xylène comme entraineur azéotropique (30 g) pour éliminer l'eau de la réaction.

La résine selon l'invention (exemple 1) est diluée dans du Solvarex® 9 pur et dans un mélange Solvarex® 9/ butylglycol (70/30) pour la résine de l'essai comparatif 1.

Les caractéristiques des deux résines sont données dans le tableau 2.

Tableau 2 : Compositions et caractéristiques des résines (hors solvant, catalyseur et entraineur azéotropique) selon l'invention (exemple 1) et essai comparatif 1

|  | Essai comparatif 1 | Essai selon l'invention (exemple 1) |
|---|---|---|
| Anhydride phtalique | 706 | 555 |
| Ethylène glycol | 84 | 83 |
| Néopentyl glycol | 210 | 121 |
| BEPD (Butyl éthyl propanediol) |  | 80 |
| 1,6 Hexanediol |  | 131 |
| Acide adipique |  | 30 |
| TOTAL | 1000 | 1000 |
| Indice d'hydroxy (mg KOH/g) (Méthode ISO 2554) | 30 | 37 |
| Indice d'acide (mg KOH/g) (Méthode ISO 2114) | 4 | 4 |
| Extrait sec (%) (Méthode ISO 3251) | 64,3 | 76 |
| Viscosité Brookfield à 25°C (mPa.s) (Méthode ISO 3219) à l'extrait sec indiqué | 3500 | 11700 |
| Mn Calculée | 3050 | 2530 |

2) Préparation de la résine pour revêtement de finition

2.1) Matières premières utilisées

Tableau 3 : Matières premières utilisées

| Nom commercial | Nom chimique | Fournisseur | Fonction technique | Nature de la fonction / fonctionnalité | Composition type selon l'invention |
|---|---|---|---|---|---|
| PAN | Anhydride phtalique | Polynt | Monomère | Carboxy/2 | Diacide b1) |
| AA | Acide adipique | Bayer | Monomère | Carboxy/2 | Diacide b2) |
| Glycérine | Glycérol | Oleon | Monomère | Hydroxy/3 | Polyol a4) |

(suite)

| Nom commercial | Nom chimique | Fournisseur | Fonction technique | Nature de la fonction / fonctionnalité | Composition type selon l'invention |
|---|---|---|---|---|---|
| NPG | Néopentyl glycol | Perstorp | Monomère | Hydroxy/2 | Diol a2) |
| BEPD | Butyl éthyl propane diol | Perstorp | Monomère | Hydroxy/2 | Diol a1) |
| TMP | Triméthylol propane | Perstorp | Monomère | Hydroxy/3 | Polyol a4) |
| Solvarex® 9 | Solvant aromatique | Total | Solvant de la résine | | Solvant de la résine |
| BG | Butyl glycol | Brenntag | Solvant de la résine | | Solvant de la résine |
| Fascat® 4100 | Oxyde de monobutyl étain | PMC Organometallix | Catalyseur | | Catalyseur |
| Xylène | Xylène | Total | Solvant entraineur azéotropique | | Solvant entraineur azéotropique |

2.2) <u>Mode opératoire de préparation de la résine</u> : selon l'invention (exemple 2) et essai comparatif 2 sans BEPD

Le mode opératoire utilisé est identique à celui décrit dans le mode opératoire au point 1.2) ci-dessus (les proportions sont données dans le tableau 4).

La résine selon l'invention (exemple 2) est diluée dans du Solvarex® 9 pur et dans un mélange Solvarex® 9/butylglycol (70/30) pour la résine de l'essai comparatif 2.

Les caractéristiques des 2 résines sont également données dans le tableau 4.

<u>Tableau 4</u> : Compositions et caractéristiques des résines (hors solvant, catalyseur et entraineur azéotropique) selon l'invention et essai comparatif

| | Essai comparatif 2 | Essai selon l'invention (exemple 2) |
|---|---|---|
| Anhydride phtalique | 418 | 390 |
| Glycérol | | 15 |
| Néopentyl glycol | 343 | 340 |
| Triméthylol propane | 77 | |
| Acide adipique | 162 | 171 |
| BEPD (Butyl éthyl propanediol) | | 84 |
| TOTAL | 1000 | 1000 |
| Indice d'hydroxy (mg KOH/g) (Méthode ISO 2554) | 55 | 60 |
| Indice d'acide (mg KOH/g) (Méthode ISO 2114) | 4 | 1,5 |
| Extrait sec (%) (Méthode ISO 3251) | 65,5 | 75,7 |
| Mn Calculée | 1760 | 1685 |

(suite)

| | Essai comparatif 2 | Essai selon l'invention (exemple 2) |
|---|---|---|
| Viscosité Brookfield à 25°C (mPa.s) (Méthode ISO 3219) à l'extrait sec indiqué | 3500 | 5800 |

3) Préparation de la résine pour revêtement d'envers de bande (ou « backer »)

3.1) Matières premières utilisées

Tableau 5 : Matières premières utilisées

| Nom commercial | Nom chimique | Fournisseur | Fonction technique | Nature de la fonction/ fonctionnalité | Composition type selon l'invention |
|---|---|---|---|---|---|
| PAN | Anhydride phtalique | Polynt | Monomère | Carboxy/2 | Diacide b1) |
| AA | Acide adipique | Bayer | Monomère | Carboxy/2 | Diacide b2) |
| EG | Ethylène glycol | Dow | Monomère | Hydroxy/2 | Diol a3) |
| NPG | Néopentyl glycol | Perstorp | Monomère | Hydroxy/2 | Diol a2) |
| BEPD | Butyl éthyl propane diol | Perstorp | Monomère | Hydroxy/2 | Diol a1) |
| TMP | Triméthylol propane | Perstorp | Monomère | Hydroxy/3 | Polyol a4) |
| Solvarex® 9 | Solvant (coupe) aromatique $C_9$ | Total | Solvant de la résine | | Solvant de la résine |
| BG | Butyl glycol | Brenntag | Solvant de la résine | | Solvant de la résine |
| Fascat® 4100 | Oxyde de monobutyl étain | PMC Organometallix | Catalyseur | | Catalyseur |
| Xylène | Xylène | Total | Solvant entraineur azéotropique | | Solvant entraineur azéotropique |

3.2) Mode opératoire de préparation de la résine : selon l'invention (exemple 3) et essai comparatif 3 sans BEPD

Le mode opératoire utilisé est identique à celui décrit au point 1.2) (les quantités sont données dans le tableau 6).
La résine selon l'invention (exemple 3) est diluée dans du Solvarex® 9 pur et dans un mélange Solvarex® 9/ butylglycol (70/30) pour la résine de l'essai comparatif 3.

Tableau 6 : Compositions et caractéristiques des résines (hors solvant, catalyseur et entraineur azéotropique) selon l'invention (exemple 3) et essai comparatif 3

| | Essai comparatif 3 | Essai selon l'invention (exemple 3) |
|---|---|---|
| Anhydride phtalique | 370 | 368 |
| Ethylène glycol | | 48 |
| Néopentyl glycol | 278 | 240 |

(suite)

|  | Essai comparatif 3 | Essai selon l'invention (exemple 3) |
|---|---|---|
| Triméthylol propane | 219 | 99 |
| Acide adipique | 133 | 140 |
| BEPD (Butyl éthyl propanediol) |  | 105 |
| TOTAL | 1000 | 1000 |
| Indice d'hydroxy (mg KOH/g) (Méthode ISO 2554) | 150 | 154 |
| Indice d'acide (mg KOH/g) (Méthode ISO 2114) | 6 | 4 |
| Extrait sec (%) (Méthode ISO 3251) | 67,5 | 76 |
| Viscosité Brookfield à 25°C (mPa.s) (Méthode ISO 3219) à l'extrait sec indiqué | 3800 | 4100 |
| Mn Calculée | 700 | 660 |

4) Application des résines dans des peintures pour feuille métallique

4.1) Feuille métallique et conditions d'application du revêtement/conditionnement avant tests

La tôle utilisée pour les essais est une tôle en acier galvanisée de 0,75 millimètre d'épaisseur prétraitée avec une solution de chromate.

La peinture est appliquée à l'aide d'un applicateur type Bar Coater. Trois types d'application sont réalisés :

- revêtement primaire,
- revêtement de finition (« top coat »),
- revêtement d'envers de bande (« backer »).

L'épaisseur du revêtement de finition et du revêtement d'envers de bande (« backer ») sur la tôle métallique est de 20 μm.

Dans le cas du revêtement de finition (« top coat »), la peinture est appliquée sur une tôle métallique enduite d'un revêtement primaire de 5 μm d'épaisseur.

La tôle ainsi revêtue est introduite dans un four ventilé.

Le tableau 7 ci-dessous donne les conditions de réticulation en fonction du type de revêtement à 385°C.

Tableau 7 : conditions de réticulation

|  | T (°C) du four | Pic de T (°C) sur le métal | Durée (s) |
|---|---|---|---|
| Primaire | 360 | 224 | 60 |
| Top Coat | 385 | 232 | 52 |
| Backer | 385 | 232 | 52 |

La peinture, en tant que revêtement primaire et d'envers de bande sur le métal et appliquée sur un Primaire en tant que revêtement de finition, est évaluée grâce aux tests de performances suivants, après conditionnement des panneaux d'essais dans une salle climatisée à 23°C ± 2° où l'humidité est contrôlée à 50% ± 5%.

| Résistance à la méthyl éthyl cétone (en s) ou à la méthyl isobutyl cétone (en s) Charge 1 Kg (MEK) ou 500 g (MIBK) / TABER linéaire | Voir description ci-dessous |
|---|---|
| Test d'emboutissage (mm) | NF EN ISO 1520 |
| Test d'adhérence | NF EN ISO 2409 |

(suite)

| Résistance à la méthyl éthyl cétone (en s) ou à la méthyl isobutyl cétone (en s) Charge 1 Kg (MEK) ou 500 g (MIBK) / TABER linéaire | Voir description ci-dessous |
|---|---|
| Adhérence + embouti 6 mm | NF EN 13523-6 |
| Adhérence + embouti 6 mm + 30 min à 90°C | NF EN 13523-6 |
| Test de pliage en T | NF EN 13523-7 |
| Dureté PERSOZ (s) | NF EN ISO 1522 |
| Rendement (g/m$^2$) | Voir ci-dessous formule |
| Gain de rendement (%) | |

La méthode de résistance au solvant indiquée consiste à faire des allers retours sur la tôle revêtue avec un dispositif d'abrasimètre TABER imbibé dudit solvant et de noter le temps (en s) au bout duquel on observe une dégradation du revêtement.

Le rendement est calculé selon la formule suivante à partir de la densité sèche de peinture, l'extrait sec et épaisseur de couche :

Rendement (en g/m$^2$) = 100 multiplié par la « densité de peinture sèche (g/m$^3$) » multiplié par « l'épaisseur de la couche de peinture (m) » et le tout divisé par « l'Extrait sec de la peinture (%) ».

Le pouvoir couvrant (en m$^2$/g/$\mu$) est égal à l'inverse du rendement (en g/m$^2$) divisé par l'épaisseur de la couche.

Le rendement (en g/m$^2$) = 100 multiplié par la « densité de peinture sèche (g/m$^3$) » multiplié par « l'épaisseur de la couche de peinture (m) » et le tout divisé par « l'Extrait sec de la peinture (%) ».

4.2) Formulation et préparation d'une peinture pour revêtement primaire

Tableau 8 : Formulation de la peinture

| | | | Fonction | Fournisseur | Nom chimique |
|---|---|---|---|---|---|
| Résine dans solvant (selon invention exemple 1 **ou** comparatif 1) | 266 | (1) | Liant testé | voir pt 1.2) et tableau 2 | Polyester |
| Solvarex® 10 LN | 38 | (2) | Solvant | Total | Hydrocarbure aromatique |
| BUTYLDIGLYCOL | 38 | (3) | Solvant | Brenntag | Ether alcool |
| DISPERBYK® 161 | 5 | (4) | Agent dispersant | BYK | Polymère bloc |
| KRONOS® 2360 | 81 | (5) | Pigment | KRONOS | Oxyde de titane |
| BAYFERROX® | 5,5 | (6) | Pigment | BAYER / LANXESS | Oxyde de fer |
| SHIELDEX® C 303 | 36 | (7) | Pigment anticorrosif | GRACE | Silice |
| K-WHITE G 105 | 36 | (8) | Pigment anticorrosif | TAYCA | Aluminium triphosphate |
| POLSPERSE® 10 | 53 | (9) | Charge | IMERYS | Kaolin |
| Aerosil® R 972 | 10 | (10) | Additif rhéologique | EVONIK | Silice |
| Résine dans solvant (selon invention exemple 1 **et** comparatif 1) | 247 | (11) | Liant testé | voir pt 1.2) et tableau 2 | Polyester |
| CYMEL® 303 LF | 50,5 | (12) | Réticulant | ALLNEX | Mélamine |

(suite)

| | | | Fonction | Fournisseur | Nom chimique |
|---|---|---|---|---|---|
| APTS (12,5% butanol w/w) | 7,9 | (13) | Catalyseur | BASF | Acide para toluène sulfonique |
| Solvarex® 10 LN | 59,5 | (14) | Solvant | Total | Hydrocarbure (coupe) aromatique en $C_{10}$ |
| BUTYLDIGLYCOL | 59,5 | (15) | Solvant | Brenntag | Ether alcool |
| EPIKOTE® 828 | 7,3 | (16) | Liant | Dow | Résine époxy |
| | | | | | |
| TOTAL | 1000 | | | | |

Dans un bécher de 1 litre thermostaté à température ambiante, on introduit dans cet ordre, les composés (1), (2), (3), (4), (5), (6), (7), (8), (9) et (10). Ce mélange est mis sous agitation à l'aide d'un agitateur type Dispermat, puis dispersé pendant 30 minutes à 3500 tours/minutes en présence de billes en verre pour faciliter la dispersion des pigments. Après élimination des billes pour le tamisage, sous agitation à 1000 tours/minute, on ajoute le reste du liant (11), les composés (12), (13) et (16). Toujours sous agitation à 1000 tours/minutes, la viscosité de la peinture est ajustée grâce à l'ajout de (14) et (15).

La peinture satinée obtenue présente les caractéristiques suivantes (tableau 9).

Tableau 9 : Caractéristiques de la peinture

| Densité (g/cm³) | 1,23 |
|---|---|
| Solide en poids (%) | 57,9 (comparatif 1) 64,5 (invention exemple 1) |
| COV (g/l) | 497(comparatif 1) 428 (invention exemple 1) |
| CPV (%) | 18 |
| Viscosité Cône plan à 25°C (m.Pas) | 410 (comparatif 1) 400 (invention exemple 1) |
| COV : Composés Organiques Volatiles CPV : Concentration Pigmentaire Volumique | |

4.2.1) Résultats applicatifs : propriétés mécaniques

Tableau 10 : Résultats applicatifs

| | Comparatif 1 | Invention exemple1 |
|---|---|---|
| Résistance à la méthyl isobutyl cétone (en s) Charge 500 g / TABER linéaire | < 5 | < 5 |
| Test d'adhérence | 0 | 0 |
| Adhérence + embouti 6 mm | 0 | 0 |
| Adhérence + embouti 6 mm + 30 min à 90°C | 0 | 0 |
| Test de pliage en T | 1,5T | 1T |
| Dureté PERSOZ (s) | 280 | 200 |
| Rendement (g/m²) | 13,2 | 11,5 |
| Pouvoir couvrant (m²/kg/μ) | 370 | 420 |
| Amélioration du pouvoir couvrant | 0 | 13,5 |

4.3) Formulation et préparation d'une peinture pour revêtement « top coat » (finition) et « backer » (envers de bande)

Tableau 11 : Liste des ingrédients pour un liant d'extrait sec testé ajusté à un extrait sec de 65% avec solvants respectifs décrits ci-haut, pour résines selon invention et exemples 2 et 3 et selon essais comparatifs 2 et 3

| | | | Fonction | Fournisseur | Nom chimique |
|---|---|---|---|---|---|
| Résine selon invention exemple 2 ou exemple 3 ou comparatif 2 ou 3 (extrait sec ajusté à 65%) | 183,5 | (1) | Liant testé | voir pts 2.2) et 3.2) | Polyester |
| Solvarex® 10 LN | 12 | (2) | Solvant | Total | Hyd rocarbu re (coupe) aromatique $C_{10}$ |
| BUTYLDIGLYCOL | 12 | (3) | Solvant | Brenntag | Ether alcool |
| DISPERBYK® 161 | 7,5 | (4) | Agent dispersant | BYK | Polymère bloc |
| KRONOS® 2360 | 298 | (5) | Pigment | KRONOS | Oxyde de titane |
| Aerosil® R 972 | 2,5 | (6) | Additif rhéologique | EVONIK | Silice |
| Résine (extrait sec 65%) | 260 | (7) | Liant testé | voir pts 2.2) et 3.2) | Polyester |
| Butyldiglycol | 8,5 | (8) | Solvant | Brenntag | Ether alcool |
| Solvarex® 10 LN | 8,5 | (9) | Solvant | Total | Hyd rocarbu re (coupe) aromatique $C_{10}$ |
| Syloid® ED 40 | 34 | (10) | Charge | GRACE | Silice |
| CYMEL® 303 LF | 56 | (11) | Réticulant | ALLNEX | Mélamine |
| APTS (12,5% butanol w/w) | 8,7 | (12) | Catalyseur | BASF | Acide paratoluène sulfonique |
| Solvarex® 10 LN | 53 | (13) | Solvant | Total | Hyd rocarbu re aromatique |
| BUTYLDIGLYCOL | 53 | (14) | Solvant | Brenntag | Ether alcool |
| Crayvallac® FLow 200 | 2 | (15) | Agent d'étalement | Arkema | Polyester |
| TOTAL | 1000 | | | | |

Dans un bécher de 1 litre thermostaté à température ambiante, on introduit dans cet ordre, les composés (1), (2), (3), (4), (5), (6). Ce mélange est mis sous agitation à l'aide d'un agitateur type Dispermat, puis dispersé 40 minutes à 3500 tours/minutes. On ajoute ensuite le reste du liant (7), une partie du solvant (8) et (9) et le composé (10). La dispersion est poursuivie 15 minutes à 2500 tours/minutes. Toujours sous agitation à 1000 tours/minutes, on ajoute les composés (11) et (12). La viscosité de la peinture est ajustée grâce à l'ajout de solvants (13) et (14). En fin de cycle, on ajoute, toujours sous agitation à 1000 tours/minutes, le composé (15).
Le revêtement « top coat » (de finition) est évalué étant appliqué sur une tôle mécanique préalablement revêtue d'un revêtement primaire proche de celui décrit au point 4.2).
La peinture semi-brillante présente les caractéristiques suivantes (tableau 12).

Tableau 12 : Caractéristiques de la peinture semi-brillante pour « top coat »

| Densité (g/cm$^3$) | CPV (%) | Extrait sec (%) | | COV (g/l) | | Viscosité Cône plan à 25°C (m.Pas) | |
|---|---|---|---|---|---|---|---|
| | | Comparatif 2 | Invention exemple 2 | Comparatif 2 | Invention exemple 2 | Comparatif 2 | Invention exemple 2 |
| 1,34 | 23 | 64,7 | 70,5 | 462 | 400 | 535 | 540 |

Tableau 13 : Caractéristiques de la peinture semi-brillante pour « backer »

| Densité (g/cm$^3$) | CPV (%) | Extrait sec (%) | | COV (g/l) | | Viscosité Cône plan à 25°C (m.Pas) | |
|---|---|---|---|---|---|---|---|
| | | Comparatif 3 | Invention exemple 3 | Comparatif 3 | Invention exemple 3 | Comparatif 3 | Invention exemple 3 |
| 1,34 | 23 | 65,3 | 72,2 | 457 | 386 | 530 | 525 |

COV : Composés Organiques Volatiles
CPV : Concentration Pigmentaire Volumique

4.3.1) Résultats applicatifs : propriétés mécaniques

Tableau 14 : Résultats applicatifs

| | Revêtement « Top Coat » | | Revêtement « Backer » | |
|---|---|---|---|---|
| Résistance à la méthyl éthyl cétone (en s) Charge 1 Kg/TABER linéaire | Comparatif 2 | Invention exemple 2 | Comparatif 3 | Invention exemple 3 |
| | > 240 | > 240 | > 240 s | 120 s $\pm$ 10 |
| Test d'emboutissage (mm) | 11,4 | 11,2 | 7,4 | 10,2 |
| Test d'adhérence | 0 | 0 | 0 | 0 |
| Adhérence + embouti 6 mm | 0 | 0 | 2 | 0 |
| Adhérence + embouti 6 mm + 30 min à 90°C | 0 | 0 | 5 | 2-3 |
| Test de pliage en T | 2,5T | 2T | 4T | 3,5T |
| Dureté PERSOZ (s) | 223 | 187 | 267 | 242 |
| Rendement (g/m$^2$) | 53,8 | 46,5 | 53,9 | 48,5 |
| Pouvoir couvrant (m$^2$/kg/$\mu$) | 372 | 430 | 371 | 413 |
| Amélioration du pouvoir couvrant (%) | 0 | 16 | 0 | 11 |

**Revendications**

1. Résine polyester porteuse d'au moins deux fonctions parmi hydroxy et/ou carboxy, **caractérisée en ce qu'**elle a une structure ramifiée et a comme composants :

   A) un composant polyol comprenant :

   a1) au moins un diol en C$_3$ à C$_6$ et porteur d'au moins deux substituants latéraux alkyles en C$_2$ à C$_4$, en particulier avec lesdits alkyles étant différents, de préférence ledit diol étant en C$_3$ ou C$_4$,
   a2) au moins un diol en C$_3$ à C$_6$ et porteur d'au moins un substituant latéral méthyle, en particulier de deux substituants latéraux méthyles, de préférence ledit diol étant en C$_3$ ou C$_4$,

a3) au moins un diol linéaire en $C_2$ à $C_6$, porteur d'aucun substituant (alkyl) latéral,
a4) au moins un polyol de fonctionnalité > 2 et de préférence de fonctionnalité de 3 ou 4, plus préférentiellement de 3

et
B) un composant polyacide comprenant :

b1) au moins un diacide aromatique ou son anhydride, de préférence représentant de 20 à 75% en poids de ladite résine
b2) au moins un diacide aliphatique linéaire, en $C_4$ à $C_{10}$, de préférence de $C_4$ à $C_8$,
b3) en option, un diacide cycloaliphatique

de préférence avec le rapport molaire b1/b2 allant de 1/1 à 4/1, ladite résine étant exempte de tout monoacide gras insaturé et de tout monoalcool gras insaturé et ayant une température de transition vitreuse mesurée par DSC à 10°C/min, de -10°C à 50°C, de préférence de 0°C à 30°C et une Mn (calculée) allant de 500 à 10000,
ladite résine ayant un indice hydroxy allant de 10 à 200 mg KOH/g,
ledit diol a1) représente de 5 à 15% en poids de ladite résine.

2. Résine polyester selon la revendication 1, **caractérisée en ce que** ledit diol a1) est le 2-butyl, 2-éthyl 1,3-propane diol.

3. Résine selon l'une des revendications 1 à 2, **caractérisée en ce que** a3) est présent et que le rapport molaire a1/(a1+a2+a3) varie de 0,1 à 0,4, de préférence de 0,1 à 0,3.

4. Résine selon l'une des revendications 1 à 3, **caractérisée en ce que** le rapport molaire a1/(a1+a2+a3+a4) varie de 0,1 à 0,4, de préférence de 0,1 à 0,3.

5. Résine selon l'une des revendications 1 à 4, **caractérisée en ce que** ledit polyol a2) est un diol sélectionné parmi: néopentyl glycol (2,2-diméthyl 1,3-propanediol) ou le diméthyl butane diol et de préférence le néopentyl glycol.

6. Résine selon la revendication 5, **caractérisée en ce que** le taux en poids dudit polyol a2) est inférieur à 75% en poids dudit composant polyol A).

7. Résine selon l'une des revendications 1 à 6, **caractérisée en ce que** le composant acide B) de ladite résine comprend au moins un diacide carboxylique cycloaliphatique b3) ou son anhydride.

8. Résine selon l'une des revendications 1 à 7, **caractérisée en ce que** ladite résine a un indice hydroxy ou un indice global hydroxy + carboxy allant de 15 à 175 mg KOH/g.

9. Résine selon l'une des revendications 1 à 8, **caractérisée en ce que** ladite résine est hydroxylée.

10. Résine selon l'une des revendications 1 à 9, **caractérisée en ce qu'**elle a une Mn (calculée) allant de 1000 à 10000.

11. Solution de résine, **caractérisée en ce qu'**elle comprend au moins une résine telle que définie selon l'une des revendications 1 à 10 et un solvant organique de ladite résine.

12. Solution de résine selon la revendication 11, **caractérisée en ce que** le taux en poids de ladite résine par rapport au poids total résine + solvant est supérieur à 60% et varie de préférence de 65 à 90%, préférentiellement de 70 à 90% et encore plus préférentiellement de 72 à 85%.

13. Composition réticulable de liant, **caractérisée en ce qu'**elle comprend comme liant au moins une résine polyester telle que définie selon l'une des revendications 1 à 10 ou une solution de résine telle que définie selon la revendication 11 ou 12.

14. Composition selon la revendication 13, **caractérisée en ce qu'**elle comprend au moins un solvant organique avec le taux de ladite résine allant de 60% à 90%, de préférence de 62 à 90%, plus préférentiellement de 65 à 85% et encore plus préférentiellement de 70 à 85% par rapport au poids total résine + solvant.

**15.** Composition selon l'une des revendications 13 ou 14, **caractérisée en ce qu'**elle est une composition de revêtement, en particulier pour feuilles métalliques.

**16.** Composition selon la revendication 15, **caractérisée en ce qu'**elle comprend en plus, au moins un agent réticulant, porteur de groupements réactifs avec les groupements hydroxyles et/ou carboxyles portés par ladite résine.

**17.** Composition selon la revendication 16, **caractérisée en ce que** ledit agent réticulant est sélectionné parmi la mélamine ou un polyisocyanate, en particulier un polyisocyanate bloqué ou un polyanhydride ou un polysilane, en particulier polysilane bloqué par alcoxy quand ladite résine est hydroxylée ou ledit agent réticulant est sélectionné parmi les polyépoxydes ou polyols quand ladite résine est carboxylée.

**18.** Composition selon l'une des revendications 13 à 17, **caractérisée en ce qu'**il s'agit d'une composition de revêtement en milieu solvant organique, en particulier d'une composition de peinture ou de vernis, plus particulièrement pour surfaces métalliques.

**19.** Composition selon l'une des revendications 13 à 18, **caractérisée en ce qu'**elle comprend en plus au moins un pigment.

**20.** Utilisation d'une résine telle que définie selon l'une des revendications 1 à 10 ou d'une solution de résine telle que définie selon la revendication 11 ou 12, comme liant dans des compositions de revêtements en milieu solvant organique, en particulier dans les compositions de revêtements réticulables.

**21.** Utilisation selon la revendication 20, **caractérisée en ce qu'**il s'agit de compositions de revêtements à comportement « monocomposant » pour métal, en particulier pour revêtement de feuille métallique (« coil »).

**22.** Utilisation selon la revendication 20 ou 21, **caractérisée en ce qu'**il s'agit de revêtement primaire, de finition, d'envers de bande ou de monocouche.

**23.** Utilisation selon la revendication 20 ou 21, **caractérisée en ce qu'**il s'agit de revêtements en poudre.

**24.** Utilisation selon la revendication 22 ou 23, **caractérisée en ce qu'**il s'agit de revêtements « bicomposants ».

**25.** Utilisation selon l'une des revendications 20 à 24, **caractérisée en ce que** ledit revêtement est pigmenté et que ladite utilisation concerne l'augmentation du pouvoir couvrant dudit revêtement.

**26.** Revêtement **caractérisé en ce qu'**il résulte de l'utilisation d'au moins une résine telle que définie selon l'une des revendications 1 à 10, d'une solution de résine telle que définie selon la revendication 11 ou 12 ou d'une composition de revêtement telle que définie selon l'une des revendications 13 à 19.

**27.** Revêtement selon la revendication 26, **caractérisé en ce qu'**il s'agit de revêtement de feuille métallique (« coil »).

**Patentansprüche**

**1.** Polyesterharz mit mindestens zwei Hydroxy- und/oder Carboxyfunktionen, **dadurch gekennzeichnet, dass** es eine verzweigte Struktur aufweist und als Komponente Folgendes aufweist:

A) eine Polyolkomponente, umfassend:

a1) mindestens ein $C_3$- bis $C_6$-Diol mit mindestens zwei seitlichen $C_2$- bis $C_4$-Alkylsubstituenten, wobei die Alkylgruppen insbesondere verschieden sind, wobei es sich bei dem Diol vorzugsweise um ein $C_3$- oder $C_4$-Diol handelt,
a2) mindestens ein $C_3$- bis $C_6$-Diol mit einem seitlichen Methylsubstituenten, insbesondere zwei seitlichen Methylsubstituenten, wobei es sich bei dem Diol vorzugsweise um ein $C_3$- oder $C_4$-Diol handelt,
a3) gegebenenfalls mindestens ein $C_3$- bis $C_6$-Diol ohne seitlichen (Alkyl-)Substituenten,
a4) mindestens ein Polyol mit einer Funktionalität > 2 und vorzugsweise einer Funktionalität von 3 oder 4, weiter bevorzugt von 3,

und

B) eine Polysäurekomponente, umfassend:

b1) mindestens eine aromatische Disäure oder deren Anhydrid, die bzw. das vorzugsweise 20 bis 75 Gew.-% des Harzes ausmacht,
b2) mindestens eine lineare aliphatische $C_4$- bis $C_{10}$- und vorzugsweise $C_4$- bis Cs-Disäure,
b3) gegebenenfalls eine cycloaliphatische Disäure,

vorzugsweise wobei das Molverhältnis b1/b2 im Bereich von 1/1 bis 4/1 liegt, wobei das Harz frei von jeglicher ungesättigter Monofettsäure und jeglichem ungesättigtem Monofettalkohol ist und eine mittels DSC mit 10 °C/min gemessene Glasübergangstemperatur von -10 °C bis 50 °C, vorzugsweise von 0 °C bis 30 °C, und ein (berechnetes) Mn im Bereich von 500 bis 10.000 aufweist,
wobei das Harz eine Hydroxylzahl im Bereich von 10 bis 200 mg KOH/g aufweist,
wobei das Diol a1) 5 bis 15 Gew.-% des Harzes ausmacht.

2. Polyesterharz nach Anspruch 1, **dadurch gekennzeichnet, dass** es sich bei dem Diol a1) um 2-Butyl-2-ethyl-1,3-propandiol handelt.

3. Harz nach einem der Ansprüche 1 bis 2, **dadurch gekennzeichnet, dass** a3) vorliegt und dass das Molverhältnis a1/(a1+a2+a3) von 0,1 bis 0,4, vorzugsweise von 0,1 bis 0,3, variiert.

4. Harz nach einem der Ansprüche 1 bis 3, **dadurch gekennzeichnet, dass** das Molverhältnis a1/(a1+a2+a3+a4) von 0,1 bis 0,4, vorzugsweise von 0,1 bis 0,3, variiert.

5. Harz nach einem der Ansprüche 1 bis 4, **dadurch gekennzeichnet, dass** es sich bei dem Polyol a2) um ein Diol, das aus Neopentylglykol (2,2-Dimethyl-1,3-propandiol) oder Dimethylbutandiol ausgewählt ist, und vorzugsweise Neopentylglykol handelt.

6. Harz nach Anspruch 5, **dadurch gekennzeichnet, dass** der Gewichtsgehalt des Polyols a2) weniger als 75 Gew.-% der Polyolkomponente A) beträgt.

7. Harz nach einem der Ansprüche 1 bis 6, **dadurch gekennzeichnet, dass** die Säurekomponente B) des Harzes mindestens eine cycloaliphatische Dicarbonsäure b3) oder deren Anhydrid umfasst.

8. Harz nach einem der Ansprüche 1 bis 7, **dadurch gekennzeichnet, dass** das Harz eine Hydroxylzahl oder eine gesamte Hydroxyl- + Carboxylzahl von 15 bis 175 mg KOH/g aufweist.

9. Harz nach einem der Ansprüche 1 bis 8, **dadurch gekennzeichnet, dass** das Harz hydroxyliert ist.

10. Harz nach einem der Ansprüche 1 bis 9, **dadurch gekennzeichnet, dass** es ein (berechnetes (Mn) im Bereich von 1000 bis 10.000 aufweist.

11. Harzlösung, **dadurch gekennzeichnet, dass** sie mindestens ein Harz gemäß einem der Ansprüche 1 bis 10 und ein organisches Lösungsmittel für das Harz umfasst.

12. Harzlösung nach Anspruch 11, **dadurch gekennzeichnet, dass** der Gewichtsgehalt des Harzes, bezogen auf das Gesamtgewicht von Harz + Lösungsmittel größer als 60 % ist und vorzugsweise von 65 bis 90 %, bevorzugt 70 bis 90 % und noch weiter bevorzugt 72 bis 85 % beträgt.

13. Vernetzbare Bindemittelzusammensetzung, **dadurch gekennzeichnet, dass** sie als Bindemittel mindestens ein Polyesterharz gemäß einem der Ansprüche 1 bis 10 oder eine Harzlösung gemäß Anspruch 11 oder 12 umfasst.

14. Zusammensetzung nach Anspruch 13, **dadurch gekennzeichnet, dass** sie mindestens ein organisches Lösungsmittel umfasst, wobei der Gehalt des Harzes im Bereich von 60 bis 90 %, vorzugsweise von 62 bis 90 %, weiter bevorzugt von 65 bis 85 % und noch weiter bevorzugt von 70 bis 85 %, bezogen auf das Gesamtgewicht von Harz + Lösungsmittel, liegt.

15. Zusammensetzung nach Anspruch 13 oder 14, **dadurch gekennzeichnet, dass** es sich dabei um eine Beschichtungszusammensetzung, insbesondere für Metallbleche, handelt.

16. Zusammensetzung nach Anspruch 15, **dadurch gekennzeichnet, dass** sie außerdem mindestens ein Vernetzungsmittel mit Gruppen, die gegenüber den Hydroxyl- und/oder Carboxylgruppen des Harzes reaktiv sind, umfasst.

17. Zusammensetzung nach Anspruch 16, **dadurch gekennzeichnet, dass** das Vernetzungsmittel aus Melamin oder einem Polyisocyanat, insbesondere einem blockierten Polyisocyanat oder einem Polyanhydrid oder einem Polysilan, insbesondere einem alkoxyblockierten Polysilan, ausgewählt ist, wenn das Harz hydroxyliert ist, oder das Vernetzungsmittel aus Polyepoxiden oder Polyolen ausgewählt ist, wenn das Harz carboxyliert ist.

18. Zusammensetzung nach einem der Ansprüche 13 bis 17, **dadurch gekennzeichnet, dass** es sich dabei um eine Beschichtungszusammensetzung in einem organischen Lösungsmittelmedium, insbesondere eine Anstrich- oder Klarlackzusammensetzung, spezieller für Metalloberflächen, handelt.

19. Zusammensetzung nach einem der Ansprüche 13 bis 18, **dadurch gekennzeichnet, dass** sie außerdem mindestens ein Pigment umfasst.

20. Verwendung eines Harzes gemäß einem der Ansprüche 1 bis 10 oder einer Harzlösung gemäß Anspruch 11 oder 12 als Bindemittel in Beschichtungszusammensetzungen in einem organischen Lösungsmittelmedium, insbesondere in vernetzbaren Beschichtungszusammensetzungen.

21. Verwendung nach Anspruch 20, **dadurch gekennzeichnet, dass** es sich um Beschichtungszusammensetzungen mit "Einkomponenten"-Verhalten für Metall, insbesondere für die Beschichtung von Metallblech ("Coil"), handelt.

22. Verwendung nach Anspruch 20 oder 21, **dadurch gekennzeichnet, dass** es sich um eine Grundierungs-, Deckschicht-, Rückschicht- oder einschichtige Beschichtung handelt.

23. Verwendung nach Anspruch 20 oder 21, **dadurch gekennzeichnet, dass** es sich um Pulverbeschichtungen handelt.

24. Verwendung nach Anspruch 22 oder 23, **dadurch gekennzeichnet, dass** es sich um "Zweikomponenten"-Beschichtungen handelt.

25. Verwendung nach einem der Ansprüche 20 bis 24, **dadurch gekennzeichnet, dass** die Beschichtung pigmentiert ist und die Verwendung die Erhöhung der Deckkraft der Beschichtung betrifft.

26. Beschichtung, **dadurch gekennzeichnet, dass** sie sich aus der Verwendung mindestens eines Harzes gemäß einem der Ansprüche 1 bis 10, einer Harzlösung gemäß Anspruch 11 oder 12 oder einer Beschichtungszusammensetzung gemäß einem der Ansprüche 13 bis 19 ergibt.

27. Beschichtung nach Anspruch 26, **dadurch gekennzeichnet, dass** es sich um eine Beschichtung für Metallblech ("Coil") handelt.

**Claims**

1. Polyester resin carrying at least two functional groups from hydroxyl and/or carboxyl, **characterized in that** it has a branched structure and has, as components:

   A) a polyol component comprising:

      a1) at least one $C_3$ to $C_6$ diol carrying at least two $C_2$ to $C_4$ alkyl side substituents, in particular with said alkyls being different, said diol preferably being a $C_3$ or $C_4$ diol,
      a2) at least one $C_3$ to $C_6$ diol carrying at least one methyl side substituent, in particular two methyl side substituents, said diol preferably being a $C_3$ or $C_4$ diol,
      a3) at least one linear $C_2$ to $C_6$ diol, carrying no (alkyl) side substituent,
      a4) at least one polyol of functionality > 2 and preferably of functionality 3 or 4, more preferentially of 3,

   and

B) a polyacid component comprising:

b1) at least one aromatic diacid or its anhydride, preferably representing from 20% to 75% by weight of said resin,
b2) at least one linear $C_4$ to $C_{10}$, preferably $C_4$ to $C_8$, aliphatic diacid,
b3) optionally a cycloaliphatic diacid, preferably with the b1/b2 molar ratio ranging from 1/1 to 4/1, said resin being devoid of any unsaturated fatty monoacid and of any unsaturated fatty monoalcohol and having a glass transition temperature, measured by DSC at 10°C/min, from -10°C to 50°C, preferably from 0°C to 30°C, and a (calculated) Mn ranging from 500 to 10000,

said resin having a hydroxyl number ranging from 10 to 200 mg KOH/g,
said diol a1) representing from 5% to 15% by weight of said resin.

2. Polyester resin according to Claim 1, **characterized in that** said diol a1) is 2-butyl-2-ethyl-1,3-propanediol.

3. Resin according to either of Claims 1 and 2, **characterized in that** a3) is present and **in that** the a1/(a1+a2+a3) molar ratio varies from 0.1 to 0.4, preferably from 0.1 to 0.3.

4. Resin according to one of Claims 1 to 3, **characterized in that** the a1/(a1+a2+a3+a4) molar ratio varies from 0.1 to 0.4, preferably from 0.1 to 0.3.

5. Resin according to one of Claims 1 to 4, **characterized in that** said polyol a2) is a diol selected from: neopentyl glycol (2,2-dimethyl-1,3-propanediol) or dimethyl butanediol and preferably neopentyl glycol.

6. Resin according to Claim 5, **characterized in that** the content by weight of said polyol a2) is less than 75% by weight of said polyol component A).

7. Resin according to one of Claims 1 to 6, **characterized in that** the acid component B) of said resin comprises at least one cycloaliphatic dicarboxylic acid b3) or its anhydride.

8. Resin according to one of Claims 1 to 7, **characterized in that** said resin has a hydroxyl number or an overall hydroxyl + carboxyl number ranging from 15 to 175 mg KOH/g.

9. Resin according to one of Claims 1 to 8, **characterized in that** said resin is hydroxylated.

10. Resin according to one of Claims 1 to 9, **characterized in that** it has a (calculated) Mn ranging from 1000 to 10000.

11. Resin solution, **characterized in that** it comprises at least one resin as defined according to one of Claims 1 to 10 and an organic solvent of said resin.

12. Resin solution according to Claim 11, **characterized in that** the content by weight of said resin, with respect to the total resin + solvent weight, is greater than 60% and preferably varies from 65% to 90%, preferentially from 70% to 90% and more preferentially still from 72% to 85%.

13. Crosslinkable binder composition, **characterized in that** it comprises, as binder, at least one polyester resin as defined according to one of Claims 1 to 10 or a resin solution as defined according to Claim 11 or 12.

14. Composition according to Claim 13, **characterized in that** it comprises at least one organic solvent with the content of said resin ranging from 60% to 90%, preferably from 62% to 90%, more preferentially from 65% to 85% and more preferentially still from 70% to 85%, with respect to the total resin + solvent weight.

15. Composition according to either of Claims 13 and 14, **characterized in that** it is a coating composition, in particular for metal sheets.

16. Composition according to Claim 15, **characterized in that** it additionally comprises at least one crosslinking agent carrying groups which react with the hydroxyl and/or carboxyl groups carried by said resin.

17. Composition according to Claim 16, **characterized in that** said crosslinking agent is selected from melamine or a polyisocyanate, in particular a blocked polyisocyanate, or a polyanhydride or a polysilane, in particular a polysilane blocked by alkoxy when said resin is hydroxylated, or said crosslinking agent is selected from polyepoxides or polyols when said resin is carboxylated.

18. Composition according to one of Claims 13 to 17, **characterized in that** it is a coating composition in an organic solvent medium, in particular a paint or varnish composition, more particularly for metal surfaces.

19. Composition according to one of Claims 13 to 18, **characterized in that** it additionally comprises at least one pigment.

20. Use of a resin as defined according to one of Claims 1 to 10 or of a resin solution as defined according to Claim 11 or 12, as binder in coating compositions in an organic solvent medium, in particular in crosslinkable coating compositions.

21. Use according to Claim 20, **characterized in that** it concerns coating compositions having a "one-component" behaviour for a metal, in particular for a metal sheet ("coil") coating.

22. Use according to Claim 20 or 21, **characterized in that** it concerns a primer, top-coat, backer or monolayer coating.

23. Use according to Claim 20 or 21, **characterized in that** it concerns powder coatings.

24. Use according to Claim 22 or 23, **characterized in that** it concerns "two-component" coatings.

25. Use according to one of Claims 20 to 24, **characterized in that** said coating is pigmented and **in that** said use relates to the increase in the covering power of said coating.

26. Coating, **characterized in that** it results from the use of at least one resin as defined according to one of Claims 1 to 10, of a resin solution as defined according to Claim 11 or 12 or of a coating composition as defined according to one of Claims 13 to 19.

27. Coating according to Claim 26, **characterized in that** it is a metal sheet ("coil") coating.

**EP 3 310 839 B1**